# EUROPÄISCHE PATENTSCHRIFT

(11) **EP 2 875 987 B1**
(45) Veröffentlichungstag und Bekanntmachung des Hinweises auf die Patenterteilung: **13.04.2016**
(21) Anmeldenummer: 13194347.4
(22) Anmeldetag: 26.11.2013
(51) Int. Cl.: B60L 11/18, H02G 11/02

(54) **Elektrische Leitung und elektrische Maschine**
Electrical wire and electrical machine
Fil électrique et machine électrique

(43) Veröffentlichungstag der Anmeldung: 27.05.2015
(73) Patentinhaber: Lapp Engineering & Co., 6330 Cham (CH)
(72) Erfinder: Schädle, Christian, 70565 Stuttgart (DE)

(56) Entgegenhaltungen:
- EP-A1- 2 506 378
- DE-A1- 4 212 207
- US-A- 4 653 833
- US-A- 5 855 262

## Beschreibung

Die Erfindung betrifft eine elektrische Leitung zur Übertragung von Energie oder Daten zu einer elektrischen Maschine, wie einem Roboter oder einem Fahrzeug, sowie eine elektrische Maschine mit einer solchen elektrischen Leitung.

Elektrische Leitungen dienen der Energieversorgung und/oder der Steuerung (durch Datenübertragung) von elektrischen Einheiten, wie Geräten, Maschinen, Robotern oder Fahrzeugen. Je nach Ausführungsform der elektrischen Einheit kann die elektrische Verbindung zwischen der Einheit und einem Energie- und/oder Datennetzwerk kontinuierlich oder auch zwischenzeitlich unterbrochen sowie mechanisch fixiert oder flexibel sein.

Geräte, Maschinen, Roboter oder Fahrzeuge welche mit einer Energiespeichereinheit ausgestattet sind, müssen nicht kontinuierlich mit einer externen Energieversorgung verbunden sein, sondern können sich zeitweise autonom bewegen. Zwischen solchen autonomen Bewegungszyklen werden die elektrischen Einheiten jeweils nach Bedarf in einer Parkposition an eine Ladestation angeschlossen, um die Energiespeichereinheit aufzuladen. Das Aufladen erfolgt üblicherweise über ein Ladekabel mit einer Länge, welche die Verbindung der aufzuladenden Funktionseinheit mit dem Energienetzwerk ermöglicht. Da das Ladekabel nicht kontinuierlich im Einsatz ist sollte es mit möglichst geringem Platzbedarf lagerbar sein.

Ein solches Ladekabel ist beispielsweise aus der DE4212207 bekannt. Die dort gezeigte Wendelleitung ist eine elastisch dehnbare Leitung, deren Rückstellkraft zumindest bei geringer Dehnung gleich oder grösser ist als das Eigengewicht der Leitung. Nachteilig an solchen Wendelleitungen ist ihre hohe Rückstellkraft, speziell bei hoher Auslenkung. Diese hohe Rückstellkraft kann die Arbeitsweise beispielsweise eines Roboterarms negativ beeinträchtigen oder einen grossen Kraftaufwand beim Anschliessen der Leitung bedingen. Ebenfalls nachteilig an solchen Wendelleitungen ist der relativ grosse Volumenbedarf für die Ablage.

Aus der EP2506378A1 ist eine elektrische Leitung bekannt welche die Form einer Spirale aufweist und die derart ausgestaltet ist, dass sie mit einer Rückstellkraft in einer Ruhestellung gehalten ist. Nachteilig hierbei sind die Limitierung der maximal erreichbaren Rückstellkraft sowie die sehr geringe Rückstellkraft bei kleinen Auslenkungen.

Gerade in Anwendungen mit mobilen (Sub-)Einheiten wie beispielsweise bei einem Roboter oder einer Maschine kann es auch vorteilhaft sein, wenn eine elektrische Leitung in der Länge verlänger-/verkürzbar ist um sich an sich ändernde Distanzen zwischen der Leistungs-/Datenaufnahmeeinheit und dem Leistungs-/Datenabgabenetzwerk anzupassen.

Hier können beispielsweise mit elektrischen Leitungen bestückte Energieführungsketten eingesetzt werden. Nachteilig an Energieführungsketten ist, dass sie nur eine beschränkte Anzahl an Freiheitsgraden aufweisen und zudem Energie benötigt wird, um die Ketten zwischen den verschiedenen Positionen nachzuführen. Es besteht deshalb ein technischer Bedarf für Leitungen, welche eine nicht eingeschränkte Anzahl an Freiheitsgraden aufweisen, sich aber gleichzeitig bis zu einem gewissen Grade selber räumlich führen können ohne dafür ein zusätzliches Element wie eine Energieführungskette zu benötigen.

Der vorliegenden Erfindung liegt daher die Aufgabe zu Grunde, eine verbesserte elektrische Leitung für die Übertragung von Energie und/oder Daten zu einer elektrischen Maschine bereitzustellen. Ferner ist eine elektrische Maschine mit einer solchen elektrischen Leitung bereitzustellen.

Die elektrische Leitung, mittels der unterschiedliche Distanzen überbrückbar sein sollen, soll dabei vorteilhaft handhabbar und mit geringem Aufwand aus einer Ablagevorrichtung entnehmbar und darin wieder verstaubar sein.

Die elektrische Leitung soll vorzugsweise eine auslenkungsabhängige Rückstellkraft aufweisen, so dass sie stets bestrebt ist, ihre ursprüngliche Form wieder anzunehmen.

Durch die Rückstellkraft soll die elektrische Leitung so weit in eine Ruhestellung rückführbar sein, dass die elektrische Leitung in der Ruhestellung ein möglichst minimales Raumvolumen einnimmt.

Diese Aufgabe wird mit einer elektrischen Leitung und einer elektrischen Maschine gelöst, welche die in Anspruch 1 bzw. 12 angegebenen Merkmale aufweisen. Vorteilhafte Ausgestaltungen der Erfindung sind in weiteren Ansprüchen angegeben.

Die elektrische Leitung umfasst einen Leitungsmantel, der zumindest zwei elektrische Leiter umfasst, die mit wenigstens einem Steckverbinder verbunden sind.

Erfindungsgemäss umfasst die elektrische Leitung wenigstens zwei spiralförmige erste Leitungsabschnitte bzw. Spiralabschnitte und wenigstens einen vorzugsweise helixförmigen zweiten Leitungsabschnitt bzw. Helixabschnitt, welcher die Spiralabschnitte miteinander verbindet. Vorzugsweise sind mehrere erste und mehrere zweite Leitungsabschnitte derart vorgesehen, dass die spiralförmigen ersten Leitungsabschnitte in Ebenen liegen, die voneinander beabstandet und parallel zueinander ausgerichtet sind. Die zweiten Leitungsabschnitte dienen primär dazu, die spiralförmigen ersten Leitungsabschnitte in den voneinander getrennten Ebenen zu halten.

Die ersten spiralförmigen Leitungsabschnitte, bei denen sich der Radius der Windungen der Leitung von einer Windung zur nächsten vergrössert bzw. verkleinert, je nach Drehrichtung der Spirale, werden nachstehend als Spiralabschnitte bezeichnet. Die zweiten Leitungsabschnitte, bei denen der Radius der Windungen von Windung zu Windung konstant ist, werden nachstehend als Helixabschnitte bezeichnet.

Durch die erfindungsgemässe Ausgestaltung der Leitungsabschnitte gelingt es, eine relativ lange elektrische Leitung in einer Ruhestellung kompakt zu lagern.

Vorzugsweise sind die elektrische Leitung oder Elemente davon mit Formgedächtnis-Eigenschaften versehen, so dass die elektrische Leitung stets bestrebt ist, ihre ursprüngliche Form wieder einzunehmen. Dieser Rückstellvorgang erfolgt vorzugsweise automatisch kann aber auch durch eine Rückstellvorrichtung unterstützt werden.

Durch diese Ausführungsform wird die durch den Leitungsmantel und/oder die elektrischen Leiter und oder einem in der elektrischen Leitung vorgesehenen Formgebungselement bei einer Auslenkung aus der Ruheposition entstehende Rückstellkraft im Vergleich zu einer Ausführung, welche nur Spiralelemente beinhaltet, erhöht. Die elektrische Leitung hat erfindungsgemäss die vorteilhafte Eigenschaft, dass sie durch die Rückstellkraft selbsttätig in einer Ruhestellung gehalten und nach Gebrauch und Freigabe in Richtung ebendieser Ruhestellung zurückgezogen wird.

Die Rückstellkraft erleichtert das Rückführen der Leitung aus einer Arbeitsstellung in die Ruhestellung. Die Arbeitsstellung kann hierbei eine beliebige, vorzugsweise durch einen Steckverbinder hergestellte, Verbindung zwischen einem Energie- und/oder Datennetzwerk und einer elektrischen Einheit, einem Fahrzeug, einem Roboter, einer Maschine oder einem elektrischen Gerät sein. Der Leitungsmantel und/oder die elektrischen Leiter und/oder das Formgebungselement sind dabei so ausgeführt, dass die Rückstellkraft mit zunehmender Auslenkung zunimmt. Durch die geometrische Form ist die Selbstrückstellkraft in den Helixabschnitten intrinsisch grösser als in den Spiralabschnitten. Die Kombination dieser beiden Typen von Abschnitten erlaubt es somit, die Gesamtrückstellkraft des elektrischen Leiters so zu optimieren, dass ein für eine vorgesehene Anwendung optimales Verhältnis von Rückstellkraft zu Auslenkung entsteht.

Aufgrund der Ausrichtung der elektrischen Leitung in der Ruhestellung wird der Platzbedarf für die Ablage erfindungsgemäss optimiert. Die Spiralabschnitte können mit einer hohen Packungsdichte erfindungsgemäss jeweils in einer Ebene abgelegt werden, wobei die jeweiligen Ebenen erfindungsgemäss durch die Helixabschnitte verbunden sind.

In einer bevorzugten Ausgestaltung weist die elektrische Leitung zumindest zwei Spiralabschnitte auf, welche durch zumindest einen Helixabschnitt verbunden sind. Die Leitung ist vorzugsweise an beiden Enden mit Steckverbindern bestückt, so dass die Leitung in einer vorzugsweisen Verwendung für das Aufladen von elektrischen Fahrzeugen eingesetzt werden kann. Zur einfacheren Bestückung der Leitung mit Steckverbindern können die Spiralabschnitte am Ende in einen geraden Endabschnitt übergehen. Bei dieser Ausführungsform können die Steckverbinder somit erfindungsgemäss neben der Leitung gelagert werden. Durch die Möglichkeit, die Leitung kompakt abzulegen, ist die erfindungsgemässe Leitung deshalb auch gut geeignet, um in einem Fahrzeug mitgeführt zu werden.

In einer weiteren vorzugsweisen Ausgestaltung weist die elektrische Leitung zumindest einen Helixabschnitt auf, welcher zumindest eine vollständige Windung aufweist. Es sind ebenfalls erfindungsgemäss auch Ausführungsformen mit einer grösseren Anzahl an Helixwindungen je Helixabschnitt möglich, was jedoch zu Lasten eines erhöhten Raumbedarfs bei der Lagerung geht.

In einer vorzugsweisen Ausgestaltung ist der Leitungsmantel aus einem halogenfreien Material gefertigt. Für Anwendungen, bei denen hohe Sicherheitsanforderungen im Brandfall bestehen, sind oftmals nur halogenfreie Materialien für Kabelummantelungen zugelassen, da halogenierte Kunststoffe im Brandfall giftige Gase freisetzen können. Der Leitungsmantel kann beispielsweise aus einem thermoplastischen Elastomer, vorzugsweise Polyurethan gefertigt sein, welches vorzugsweise zumindest teilweise vernetzt sein kann.

Die elektrischen Leiter sind vorzugsweise aus Kupfer und/oder Aluminium oder einer leitfähigen Legierung welche Kupfer und/oder Aluminium enthält gefertigt. Durch die Wahl dieser Materialien für Leitungsmantel und elektrische Leiter ist es möglich, die gesamte Leitung nach der Fertigung unter Erwärmen in eine gewünschte Form, beispielsweise in die erfindungsgemässe Abfolge von Spiral- und Helixabschnitten, zu bringen, wobei diese Form dann nach dem Abkühlen konserviert bleibt. In einer vorzugsweisen Ausführung ist der Leitungsmantel und/oder ein optionales Formgebungselement und/oder die elektrischen Leiter so ausgeführt, dass die elektrische Leitung nach dem Abkühlen über selbstrückstellende Eigenschaften bzw. über ein Formgedächtnis verfügt.

In einer weiteren vorzugsweisen Ausgestaltung umfasst die Leitung neben den elektrischen Leitern noch zumindest einen Lichtwellenleiter zur optischen Datenübertragung. Über diese zumindest eine optische Faser können Daten auf eine Steuerungseinheit eines Fahrzeugs, eines Roboters, einer Maschine oder eines weiteren elektrischen Geräts geschrieben werden, vorzugsweise parallel zum Ladevorgang.

In einer weiteren vorzugsweisen Ausgestaltung wird die erfindungsgemässe elektrische Leitung für die Daten- und/oder Energieübertragung zu einem Roboter oder einer Maschine benutzt. Hierbei ist die Leitung vorzugsweise an einer Decke oberhalb der Maschine/des Roboters fixiert und mit einem Ende an ein zentrales Daten- und/oder Energienetzwerk angeschlossen. In der Ruheposition an der Decke stört die Leitung somit nicht die Bewegungen des Roboters/beweglicher Teile der Maschine.

Im Bedarfsfall kann die Leitung durch herunterziehen des nicht mit dem Daten-/Energienetzwerks verbundenen Endes der Leitung mit dem Roboter/der Maschine verbunden werden. Vorzugsweise ist für diesen Vorgang an der Leitung und/oder an einem Steckverbinder, welcher an einem Ende der Leitung angebracht ist, eine Vorrichtung angebracht, welche das Greifen und Herunterziehen der Leitung, beispielsweise mit einem Greifarm oder einer Hakenstange vereinfacht.

Die Leitung kann zudem mit einer Rückstellvorrichtung versehen sein, um die durch die Gravitationskräfte erschwerte Rückführung in die Ruheposition zu unterstützen. Diese zusätzliche Rückstellvorrichtung kann beispielsweise durch eine Feder oder einen Seilzug realisiert werden.

Nachfolgend wird die Erfindung anhand von Zeichnungen näher erläutert. Dabei zeigt:
- Fig. 1a: eine erfindungsgemässe elektrische Leitung 1 in der Ruheposition in verschiedenen Ansichten;
- Fig. 1b: eine erfindungsgemässe elektrische Leitung 1 in aus der Ruheposition ausgelenkter Position in schematischer Seitenansicht;
- Fig. 2: einen Schnitt durch eine erfindungsgemässe elektrische Leitung 1 in die ein Formgebungselement 18 integriert ist;
- Fig. 3: eine erfindungsgemässe elektrische Leitung 1 in der Ruheposition mit zwei Steckverbindern 21 in einer dafür vorgesehenen Kabellagervorrichtung;
- Fig. 4: eine erfindungsgemässe Leitung 1 bestehend aus mehreren Spiralabschnitten 13, 14, 22 und Helixabschnitten 15 in aus der Ruheposition ausgelenkter Position in schematischer Seitenansicht mit gestrichelten Linien, die die Veränderung des Radius der Windungen über die verschiedenen Abschnitte illustrieren;

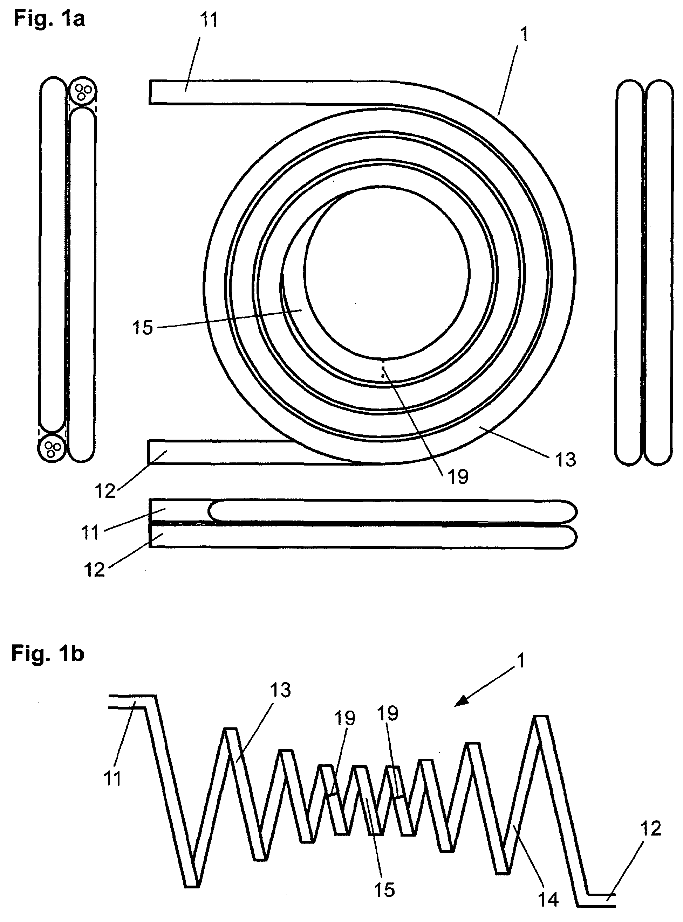

Figur 1a zeigt eine erfindungsgemässe elektrische Leitung 1 in einer Ruheposition in einer Draufsicht sowie in drei Seitenansichten. Die Leitung ist begrenzt durch einen ersten Endabschnitt 11 und einen zweiten Endabschnitt 12, an welchen optional auch Steckverbinder angebracht sein können. Der erste Endabschnitt 11 geht unterbruchsfrei in einen ersten Spiralabschnitt 13 über. Dieser erste Spiralabschnitt 13 ist so ausgeführt, dass die elektrische Leitung 1 in diesem Bereich formbündig und in einer Ebene in der Form einer Spirale gelagert werden kann. Wie für eine Spirale charakteristisch, nimmt der Radius der Windungen von aussen nach innen ab. Durch einen Abschnittübergang 19 ist der erste Spiralabschnitt unterbruchsfrei mit einem Helixabschnitt 15 verbunden. Der Helixabschnitt ist erfindungsgemäss so ausgeführt, dass die Windungen der Leitung in diesem Abschnitt nur aufeinander gelagert werden können, da der Radius der Windungen hier konstant bleibt. Durch den Helixabschnitt können somit die verschiedenen Ebenen an planar gelagerten Spiralabschnitten verbunden werden. Eine erfindungsgemässe Leitung 1 kann sowohl links- als auch rechtsherum gewickelt sein.

Figur 1b zeigt eine erfindungsgemässe elektrische Leitung 1 in einer schematischen Seitendarstellung in aus der Ruheposition ausgelenkter Position. Die elektrische Leitung 1 umfasst einen ersten Endabschnitt 11 welcher unterbruchsfrei in einen ersten Spiralabschnitt 13 übergeht. Dieser erste Spiralabschnitt 13 ist weiter durch einen Abschnittübergang 19 mit einem Helixabschnitt 15 verbunden, welcher wiederum durch einen weiteren Abschnittübergang 19 mit einem zweiten Spiralabschnitt 14 verbunden ist, welcher mit einem zweiten Endabschnitt 12 verbunden ist. Die beiden Endabschnitte 11, 12 sind optional und können bei analogen, ebenfalls erfindungsgemässen Ausführungen auch weggelassen werden. In der Regel sind an den Endabschnitten (oder direkt am Ende der Spiralabschnitte, sofern die Endabschnitte weggelassen sind) Steckverbinder angebracht.

Durch die Auslenkung der Leitung - wie in Figur 1b gezeigt - aus der in Figur 1a gezeigten Ruheposition entsteht aufgrund der Formgedächtnis-Eigenschaft der elektrischen Leitung 1 eine Rückstellkraft welche vom Endabschnitt in Richtung der Ruheposition gerichtet ist.

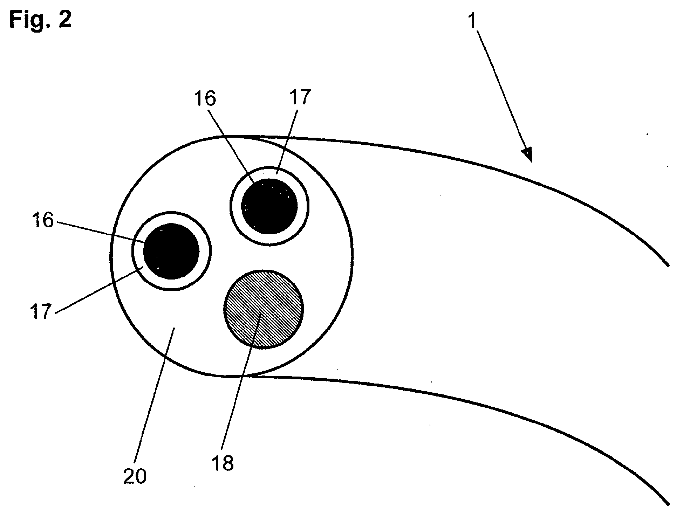

Figur 2 zeigt eine erfindungsgemässe Leitung 1 in einer Schnittdarstellung. Die Leitung 1 umfasst zwei elektrische Leiter 16 welche beispielsweise aus Kupfer oder Aluminium gefertigt sind. Die elektrischen Leiter 16 können jeweils entweder aus einem einzelnen Metalldraht oder auch aus zu Litzen verseilten feinen Metalldrähten bestehen. Die elektrischen Leiter 16 können von einer Leiterisolation 17 umgeben sein. Die Leitung 1 kann zusätzlich zu den elektrischen Leitern 16 ein Formgebungselement 18 enthalten, welches die Rückstellkraft im ausgelenkten Zustand erzeugt oder verstärkt. Das Formgebungselement 18 kann beispielsweise aus einem mit Glasfasern verstärkten Kunststoff bestehen. Die elektrischen Leiter 16 sowie das optionale Formgebungselement 18 sind durch einen alle Komponenten umgebenden Leitungsmantel 20 verbunden.

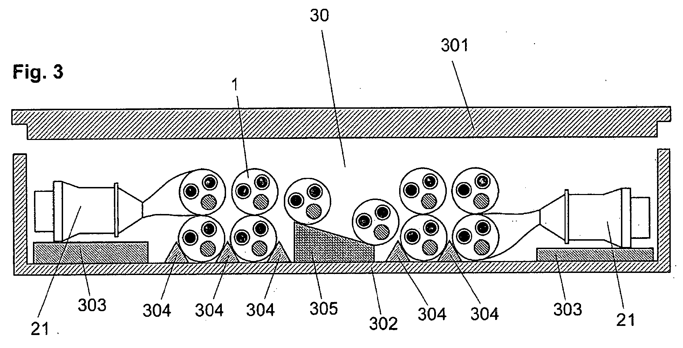

Figur 3 zeigt eine Schnittdarstellung einer erfindungsgemässen Leitung 1 welche in einer erfindungsgemässen Kabellagervorrichtung 30 abgelegt ist. Die elektrische Leitung 1 ist an beiden Enden mit Steckverbindern 21 versehen, welche auf Steckverbinderablageelementen 303 abgelegt werden können. An der Kabellagervorrichtung 30 können Aufrollhilfen 304 angebracht sein, welche eine schnelle und stabile Fixierung der einzelnen Windungen des ersten Spiralabschnitts in der Kabellagervorrichtung 30 erlauben. Die darüber liegenden Windungen der weiteren Spiralabschnitte werden dadurch ebenfalls vorteilhaft in Position gehalten, durch die Reibung zwischen den Kabelmänteln. Der Helixabschnitt, welcher in der Mitte der Kabellagervorrichtung 30 zu liegen kommt, wird durch ein asymmetrisches Ablageelement für den Helixabschnitt 305 vorteilhaft in Position gehalten. Die Lagervorrichtung 30 ist zudem durch eine Abdeckung 301 verschliessbar.

Die Lagervorrichtung 30 ist sowohl für den Transport einer erfindungsgemässen Leitung als auch für die Ablage einer erfindungsgemässen Leitung in einem Fahrzeug, einem Roboter, einer Maschine oder einem elektrischen Gerät geeignet.

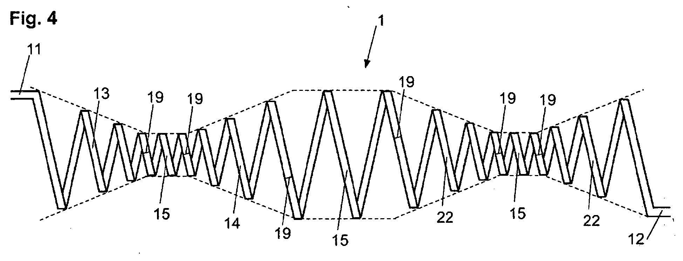

Figur 4 zeigt eine mögliche Ausführungsform einer erfindungsgemässen Leitung 1 in einer schematischen Seitendarstellung in einer aus der Ruheposition ausgelenkten Position. Die Leitung 1 ist analog zur in Figur 1b gezeigten Leitung aufgebaut, umfasst aber zusätzliche Spiralabschnitte 22 welche ebenso durch Abschnittsübergänge 19 mit Helixabschnitten 15 verbunden sind. Wie in Figur 4 beispielhaft gezeigt, ist die Anzahl an Spiral- und Helixabschnitten 22; 15 in erfindungsgemässen Ausführungen von elektrischen Leitungen 1 nicht beschränkt. Ein Endabschnitt 11, 12 kann erfindungsgemäss sowohl an einen Helixabschnitt 15 - als auch an einen Spiralabschnitt 22 anschliessen.

Die Ruheposition der in Figur 4 gezeigten Leitung ist analog zur in Figur 1a gezeigten Position für eine elektrische Leitung 1 mit zwei Spiralabschnitten 22 und einem Helixabschnitt 15. Die gestrichelten Hilfslinien veranschaulichen den sich ändernden Radius der Windungen. Im Bereich der Helixabschnitte 15 bleibt der Radius der Windungen jeweils konstant (verdeutlicht durch horizontale gestrichelte Linien). Auch bei einer grösseren Anzahl an Spiralabschnitten 22 sind diese in der Ruheposition jeweils in einer Ebene ablegbar wobei die verschiedenen Ebenen durch die Helixabschnitte 15 verbunden werden. Wie in Figur 4 ersichtlich, sind Helixabschnitte erfindungsgemäss sowohl mit kleinem Windungsradius (so dass dieser Abschnitt im abgelegten Zustand innen in Bezug auf den angrenzenden Spiralabschnitt zu liegen kommt) als auch mit grossem Windungsradius (so dass dieser Abschnitt im abgelegten Zustand aussen in Bezug auf den angrenzenden Spiralabschnitt zu liegen kommt) möglich. Weiter sind erfindungsgemässe Ausführungsformen, bei denen die elektrische Leitung 1 mit einem Helixabschnitt 15 (der an einen Endabschnitt 11, 12 anschliesst oder nicht) beginnt, möglich. Die Zahl der Windungen für jeden Helixabschnitt 15 und jeden Spiralabschnitt 22 wird durch den Anwender bedarfsweise gewählt.

In einer vorzugsweisen Ausgestaltung sind die Spiralabschnitte 22 derart gewählt, dass deren Durchmesser von einem zum anderen Ende der elektrischen Leitung 1 abnimmt. Vorzugsweise definieren die Durchmesser der Spiralabschnitte 22 einen Konus, welcher sich zum Anwendungsbereich hin verjüngt.

Auf diese Weise kann eine elektrische Maschine unabhängig vom vorliegenden Abstand vorteilhaft an die elektrische Leitung 1 angeschlossen werden. Sofern die elektrische Maschine, zum Beispiel ein Roboter oder ein Fahrzeug mit elektrischen Antriebseinheiten, nahe bei der elektrischen Leitung 1 steht, kann nur der frontseitige Spiralabschnitt 22 gedehnt werden. Da dieser einen geringeren Durchmesser aufweist, wird der Handlungsspielraum des Anwenders oder der elektrischen Maschine nur gering beschränkt. Sofern die elektrische Maschine in einem grösseren Abstand zur Leitung steht, werden alle Spiralabschnitte 22 gedehnt. Wobei im Anschlussbereich der Spielraum des Anwenders oder elektrischen Maschine wiederum nicht beschränkt wird.

### Bezugszeichenliste

- 1: elektrische Leitung
- 11: erster Endabschnitt
- 12: zweiter Endabschnitt
- 13, 14: erste Leitungsabschnitte; Spiralabschnitte
- 15: zweiter Leitungsabschnitt; Helixabschnitt
- 16: elektrische Leiter
- 17: Leiterisolation
- 18: zusätzliches Formgebungselement
- 19: Abschnittübergang
- 20: Leitungsmantel
- 21: Steckverbinder
- 22: zusätzlicher Spiralabschnitt
- 30: Lagervorrichtung
- 301: Abdeckung
- 302: Gehäuse
- 303: Steckverbinderablageelement
- 304: Aufrollhilfe
- 305: Ablageelement für Helixabschnitt

## Patentansprüche

1. Elektrische Leitung (1), umfassend wenigstens zwei spiralförmige erste Leitungsabschnitte (13, 14, 22) und wenigstens einen helixförmigen zweiten Leitungsabschnitt (15), der zwischen den ersten Leitungsabschnitten (13, 14, 22) angeordnet ist, mit einem Leitungsmantel (20), innerhalb dessen wenigstens zwei isolierte elektrische Leiter (16) vorgesehen sind, die an mindestens einem ersten Endabschnitt (11) mit wenigstens einem Steckverbinder (21) verbunden sind, **dadurch gekennzeichnet, dass** die ersten spiralförmigen Leitungsabschnitte (13, 14, 22) und der wenigstens eine zweite helixförmige Leitungsabschnitt (15) derart ausgebildet sind, dass die elektrische Leitung (1) eine inhärente Rückstellkraft aufweist, die mit zunehmender Auslenkung der elektrischen Leitung (1) ansteigt.

2. Elektrische Leitung (1) nach Anspruch 1, **dadurch gekennzeichnet, dass** die elektrische Leitung (1) mehrere erste Leitungsabschnitte (13, 14) und mehrere zweite Leitungsabschnitte (15) aufweist wobei die ersten oder die zweiten Leitungsabschnitte (22, 15) an den Enden der elektrischen Leitung (1) liegen.

3. Elektrische Leitung (1) nach Anspruch 1, **dadurch gekennzeichnet, dass** die ersten und die zweiten Leitungsabschnitte (13, 14, 22; 15) so ausgeführt sind, dass die elektrische Leitung (1) kompakt gelagert werden kann.

4. Elektrische Leitung (1) nach einem der Ansprüche 1 bis 3, **dadurch gekennzeichnet, dass** die einzelnen ersten Leitungsabschnitte (13, 14, 22)in der Ruhestellung in zueinander parallelen Ebenen planar ausgerichtet sind wobei die Windungen der ersten Leitungsabschnitte (13, 14, 22) oder jedes ersten Leitungsabschnitts (13; 14; 22) vorzugsweise formbündig aneinander anliegen.

5. Elektrische Leitung (1) nach einem der Ansprüche 1 bis 4, **dadurch gekennzeichnet, dass** der zumindest eine zweite Leitungsabschnitt (15) eine oder mehrere Windungen aufweist, mittels denen die ersten Leitungsabschnitte (13, 14, 22) getrennt voneinander in vorzugsweise parallelen Ebenen gehalten sind.

6. Elektrische Leitung (1) nach einem der Ansprüche 1 bis 5, **dadurch gekennzeichnet, dass** der Leitungsmantel (20) und/oder die elektrischen Leiter (16) und/oder wenigstens ein in der elektrischen Leitung (1) vorgesehenes Formgebungselement (18) einen Formgedächtnis-Effekt aufweisen.

7. Elektrische Leitung (1) nach einem der Ansprüche 1 bis 6, **dadurch gekennzeichnet, dass** die elektrischen Leiter (16) aus Kupfer und/oder Aluminium oder aus einer leitfähigen Legierung bestehen, die vorzugsweise Kupfer oder Aluminium enthält.

8. Elektrische Leitung (1) nach Anspruch 6 oder 7, **dadurch gekennzeichnet, dass** der Leitungsmantel (20) aus einem zumindest teilweise vernetzten Material oder einem thermoplastischen Elastomer, wie PUR und/oder aus einem halogenfreien Material besteht.

9. Elektrische Leitung (1) nach einem der Ansprüche 1 bis 8, **dadurch gekennzeichnet, dass** der Leitungsmantel (20) zumindest einen der Datenübertragung dienenden Lichtwellenleiter enthält oder umschliesst.

10. Elektrische Leitung (1) nach einem der Ansprüche 1 bis 9, **dadurch gekennzeichnet,**
**dass** ein Leitungsabschnitt (15, 22) oder ein Endabschnitt (11, 12) der elektrische Leitung (1) von einer Lagervorrichtung (30) in einer Montageposition gehalten ist, in der die elektrische Leitung (1) zumindest annähernd in einer Montageebene ausgerichtet gehalten ist; und/oder
**dass** zumindest ein Endabschnitt (11, 12) der elektrischen Leitung (1) mit einer Zugvorrichtung verbunden und damit aus der Montageebene ziehbar ist; und/oder
**dass** ein Leitungsabschnitt (15, 22) oder ein Endabschnitt (11, 12) der elektrische Leitung (1) mit einer Rückstellvorrichtung verbunden ist, mittels der die Rückstellkraft der elektrischen Leitung (1) erhöht wird.

11. Elektrische Maschine, insbesondere ein Roboter oder ein Fahrzeug mit einem elektrischen Antrieb, welcher mit einer elektrischen Leitung (1) nach einem der Ansprüche 1 bis 10 verbunden oder verbindbar ist.

12. Elektrische Maschine nach Anspruch 11 mit einer elektrischen Leitung (1), die im Ruhezustand in einer Ebene oberhalb der elektrischen Maschine gelagert ist, so dass die elektrische Maschine sich beschränkungsfrei in der Ebene unterhalb der elektrischen Leitung (1) bewegen kann.

13. Elektrische Maschine nach Anspruch 11 in Ausgestaltung eines Fahrzeugs, **dadurch gekennzeichnet, dass** eine Lagervorrichtung (30) innerhalb des Fahrzeugs vorgesehen ist, in der die elektrische Leitung (1) gelagert ist, die vorzugsweise mit einer Haltevorrichtung oder Zugvorrichtung verbunden ist, mittels der die elektrische Leitung (1) in den Einsatzbereich gezogen werden kann. Z.

14. Elektrische Maschine (1) nach Anspruch 11, 12 oder 13, **dadurch gekennzeichnet, dass** die elektrische Leitung (1) mit einer Rückstellvorrichtung verbunden ist.

## Claims

1. Electric cable (1), comprising at least two spiral-shaped first conductor sections (13, 14, 22) and at least one helix-shaped second conductor section (15), which is located between the first conductor sections (13, 14, 22), with a jacket (20), within which at least two isolated electric conductors (16) are provided, that are connected on at least a first terminal section (11) with at least one connector (21),
**wherein,** the spiral-shaped first conductor sections (13, 14, 22) and the at least one helix-shaped second conductor section (15) are designed such that the electric cable (1) exhibits an inherent restoration force that increases with increased deflection of the electronic cable (1).

2. Electric cable (1) according to claim 1, **wherein,** the electric cable (1) comprises several first conductor sections (13, 14) and several second conductor sections (15) with the first or second conductor sections (22, 15) being located at the terminations of the electric cable (1).

3. Electric cable (1) according to claim 1, **wherein,** the first and second conductor sections (13, 14, 22; 15) are designed such that the electric cable (1) can be stored in a compact manner.

4. Electric cable (1) according to one of the claims 1 to 3, **wherein,** the individual first conductor sections (13, 14, 22) are, in the rest position, oriented in mutually parallel planes with the coils of the first conductor sections (13, 14, 22) or of each first conductor section (13; 14; 22) being preferably in contact with each other.

5. Electric cable (1) according to one of the claims 1 to 4, **wherein,** the at least one second conductor section (15) comprises one or more coils, by means of which the first conductor sections (13, 14, 22) are separated from each other, preferably in parallel planes.

6. Electric cable (1) according to one of the claims 1 to 5, **wherein,** the jacket (20) and/or the electric conductor (16) and/or at least one shape element (18), which is provided within the electric cable (1), exhibits a shape-memory effect.

7. Electric cable (1) according to one of the claims 1 to 6, **wherein,** the electric conductor (16) is made of copper and/or aluminium or a conductive alloy, that preferably comprises copper or aluminium.

8. Electric cable (1) according to claim 6 or 7, **wherein,** the jacket (20) is made of a at least partially crosslinked material or a thermoplastic elastomer such as PUR and/or of a halogen free material.

9. Electric cable (1) according to one of the claims 1 to 8, **wherein,** the jacket (20) comprises or encloses at least one optical waveguide for data transmission.

10. Electric cable (1) according to one of the claims 1 to 9, **wherein,**
a conductor section (15, 22) or a terminal section (11, 12) of the elctric cable (1) is held in a mounting position by a storage device (30), with the electric cable (1) being at least partially oriented in a mounting plane; and/or
at least one terminal section (11, 12) of the electric cable (1) is connected to a pulling device by means of which the electric cable (1) is movable out of the mounting plane; and/or
a conductor section (15, 22) or a terminal section (11, 12) of the electric conductor (1) are connected to a restoration device, by means of which the restoration force of the electric cable (1) is increased.

11. Electrical machine, in particular a robot or a vehicle with an electric drive, which is connected to or connectable with an electric cable (1) according to one of the claims 1 to 10.

12. Electrical machine according to claim 11 with an electric cable (1), which is stored in the idle state in a plane above the electric machine such that the electrical machine can move restriction-free in the plane underneath the electric cable (1).

13. Electrical machine according to claim 11 implemented as a vehicle, **wherein** a bearing device (30) is provided inside the vehicle, with the electric cable (1) being stored inside said bearing device (30), which is preferably connected to a holding or pulling device, with which the electric cable (1) can be pulled to the area of application.

14. Electrical machine according to claim 11, 12 or 13, **wherein** the electric cable (1) is connected to a resetting device.

## Revendications

1. Câble électrique (1), comprenant au moins deux premières sections conductrices spiraloïdes (13, 14, 22) et au moins une deuxième section conductrice hélicoïde (15), qui est placé entre les premières sections conductrices (13, 14, 22), avec une gaine de câble (20), à l'intérieur de laquelle sont prévus au moins deux conducteurs électriques (16), qui sont connectés à au moins une section terminale (11) avec un connecteur (21), **caractérisé en ce que** les premières sections conductrices spiraloïdes (13, 14, 22) et la au moins une seconde section conductrice helicoïdale (15) sont conçu de manière à ce que le câble électrique (1) présente une force de rappel inhérente qui augmente avec la déflection du câble électrique (1).

2. Câble électrique (1) selon la revendication 1, **caractérisé en ce que** le câble électrique (1) présente plusieures premières sections conductrices (13, 14) et plusieures secondes sections conductrices (15), les premières ou secondes sections conductrices (22, 15) étant aux bouts du câble électrique (1).

3. Câble électrique (1) selon la revendication 1, **caractérisé en ce que** les premières et secondes sections conductrices (13, 14, 22; 15) sont conçus de manière à ce que le câble électrique (1) peut être posé de manière compacte.

4. Câble électrique (1) selon une des revendications 1 à 3, **caractérisé en ce que** les premières sections conductrices (13, 14, 22) sont orientées dans la position de repos dans des plans parallèles, les tours des premières sections conductrices (13, 14, 22) ou de chaque première section conductrice (13; 14; 22) étant de préférence l'un contre l'autre sans espace.

5. Câble électrique (1) selon une des revendications 1 à 4, **caractérisé en ce que** la au moins une seconde section conductrice (15) présente un ou plusieurs tours, au moyen duquel les premières sections conductrices (13, 14, 22) sont tenu séparés l'une de l'autre dans des plans préférentiellement parallèles.

6. Câble électrique (1) selon une des revendications 1 à 5, **caractérisé en ce que** la gaine du cable (20) et/ou le conducteur électrique (16) et/ou au moins un élément de mise en forme (18) prévu dans le câble électrique (1) présentent un effet de mémoire de forme.

7. Câble électrique (1) selon une des revendications 1 à 6, **caractérisé en ce que** le conducteur électrique (16) est formé de cuivre et/ou d'aluminium ou d'un alliage conducteur, qui contient de préférence du cuivre ou de l'aluminium.

8. Câble électrique (1) selon la revendication 6 ou 7, **caractérisé en ce que** la gaine du câble (20) est formé d'un matériaux au moins partiellement réticulé ou d'un élastomère thermoplaste, comme PUR et/ou d'un matériaux exempt d'halogène.

9. Câble électrique (1) selon une des revendications 1 à 8, **caractérisé en ce que** la gaine de câble (20) comprend au moins un guide optique destiné à transmettre des donnés.

10. Câble électrique (1) selon une des revendications 1 à 9, **caractérisé en ce que**
une section conductrice (15, 22) ou une section terminale (11, 12) du câble électrique (1) est tenu dans une position de montage par un dispositif de support (30), dans lequel le câble électrique (1) est tenu au moins à peu près dans un plan de montage; et/ou
au moins une section terminale (11, 12) du câble électrique (1) est connecté à un dispositif de tir au moyen duquel il peut être tiré du plan de montage; et/ou
une section conductrice (15, 22) ou une section terminale (11, 12) du câble électrique (1) est connecté à un dispositif de repositionnement, au moyen duquel la force de rappel du câble électrique (1) est augmenté.

11. Machine électrique, en particulier un robot ou un véhicule avec un moteur électrique, qui est connecté ou connectable à un câble électrique (1) selon une des revendications 1 à 10.

12. Machine électrique selon la revendication 11 avec un câble électrique (1), qui est stocké dans l'état de repos dans un plan au-dessus de la machine électrique, de manière à ce que la machine électrique peut se déplacer sans limites dans le plan au-dessous du câble électrique (1).

13. Machine électrique selon la revendication 11 sous forme d'un véhicule, **caractérisé en ce qu'**un dispositif de support (30) est prévu à l'intérieur du véhicule, le câble électrique pouvant être placé dans ledit dispositif de support (30), qui est de préférence connecté à un dispositif de tir ou une poignée au moyen duquel le câble électrique peut être tiré dans le domaine d'application.

14. Machine électrique selon une des revendications 11, 12 ou 13, **caractérisé en ce que** le câble électrique (1) est connecté à un dispositif de repositionnement.
